## Europäisches Patentamt

## European Patent Office

## Office européen des brevets

(11) Publication number: **0 048 619**
**B1**

# EUROPEAN PATENT SPECIFICATION

(45) Date of publication of patent specification: **17.04.85**

(51) Int. Cl.⁴: **C 08 L 9/06,** B 60 C 1/00

(21) Application number: **81304330.4**

(22) Date of filing: **21.09.81**

(54) **Rubber composition for tires.**

(30) Priority: **20.09.80 JP 130076/80**

(43) Date of publication of application:
**31.03.82 Bulletin 82/13**

(45) Publication of the grant of the patent:
**17.04.85 Bulletin 85/16**

(84) Designated Contracting States:
**BE DE FR GB IT NL SE**

(56) References cited:
DE-A-1 957 366
DE-A-2 740 572
FR-A-1 594 358
FR-A-2 405 147

(73) Proprietor: **BRIDGESTONE TIRE COMPANY LIMITED**
**10-1, Kyobashi 1-Chome Chuo-Ku**
**Tokyo (JP)**

(72) Inventor: **Fujimaki, Tatsuo**
**2800-1, Ogawahigashi-Cho**
**Kodaira City Tokyo (JP)**
Inventor: **Yamaguchi, Shinsuke**
**740-18, Hakonegasaki Mizuho-Machi**
**Nishitama-Gun Tokyo (JP)**
Inventor: **Yamada, Tomoharu**
**29-1, Onta-Cho 2-Chome**
**Higashi-murayama City Tokyo (JP)**
Inventor: **Tomita, Seisuke**
**4-5-708, Hon-Cho 1-Chome**
**Higashi-murayama City Tokyo (JP)**

(74) Representative: **Whalley, Kevin et al**
**Marks & Clerk 57/60 Lincoln's Inn Fields**
**London WC2A 3LS (GB)**

Courier Press, Leamington Spa, England.

# 0 048 619

## Description

The present invention relates to a rubber composition suitable for pneumatic tires.

Recently, as a result of increased requirements for energy saving, there have been developed so-called low fuel consumption tires in order to reduce power loss.

It has been generally known that an automobile provided with tires having a low rolling resistance has a low fuel consumption, and the tires are so-called low fuel-consumption tires. In order to reduce the rolling resistance, there are generally used as the tread rubber of such tires materials having a low glass transition temperature, such as cis-polybutadiene rubber, or materials having a low hysteresis loss, such as natural rubber.

However, these rubbers have an extremely low running stability, such as braking performance on a wet road and wet driving performance, and it has been very difficult to concurrently satisfy the requirements of running stability on a wet road and rolling resistance.

Recently, it has been known, as described in Japanese Patent Laid-open Application No. 62,248/79, to improve the rolling resistance and running stability of a tire by using only a styrene-butadiene copolymer (SBR) having a styrene content of 20—40% by weight and 1,2-bond content in the bonded butadiene of 50—80% by weight, but all the polymer consists of the SBR, so that satisfactory results have not been always obtained since while the running stability is improved, the rolling resistance is not sufficient.

Moreover, in this prior composition, conventional solution polymerization-type SBR obtained by using an organolithium compound is used. Therefore, a rubber composition containing the SBR has a poor breakage strength and poor elongation at break, and hence there are various problems concerned with running of the tire or in the production of the tire. The problem arising during running of the tire is the formation of cuts and cracks on the tread surface during running of the tire on nonpaved roads, and the problem arising during production of the tire is the breakage of the tread caused by the mold when a vulcanized tire is taken out from the mold, that is so-called tread scratch formed by the mold. Furthermore, the above described SBR has a glass transition temperature higher than that of conventional SBR, and therefore a rubber composition containing the above described SBR is apt to be hardened, and the tire tread is often of insufficient quality due to the low-temperature brittleness.

Accordingly, there has not yet been attained a rubber composition concurrently satisfying the requirements of both rolling resistance and running stability while maintaining good breakage resistance and wear resistance.

The present inventors have made studies with a view to overcoming the above described problems and have noted that deformation at the friction surface of the tire tread occurs at high speed, and that the hysteresis loss upon deformation at high speed has a great influence on the friction force, that is the running stability of the tire, while the deformation of the tread owing to ground contact, which has a great influence on the rolling resistance of the tire, corresponds to the rotational speed of the tire, so that a hysteresis loss upon deformation of less than 100 Hz has a great influence on the rolling resistance. According to the temperature-time deducibility by Williams, Landel and Ferry, it is supposed that hysteresis loss at high speed controlling the running stability conforms to the hysteresis loss measured at a lower temperature at which the tire is used, and hence the inventors have made studies concerning the condition under which the hysteresis loss is made larger in order to improve the running stability, and have found that when the hysteresis loss measured at about 0°C in a dynamic measurement of 1.5 Hz is larger and the hysteresis loss at 50—70°C is smaller, rubber compositions wherein both the running stability and low rolling resistance are concurrently improved can be obtained.

Based on the above described discovery, the inventors have disclosed that high vinyl SBR having a 1,2-bond content in the butadiene units of not less than 60% by weight can somewhat improve concurrently the low rolling resistance and running stability. However, since such high vinyl SBR has insufficient breakage resistance and wear resistance, the high vinyl SBR must be blended with other diene rubber. Moreover, unless a large amount of other diene rubber is blended, the resulting rubber cannot be practically used. As a result, when high vinyl SBR is used, the resulting rubber composition has satisfactory rolling resistance, but has poor running stability.

The inventors have further disclosed that a rubber composition consisting mainly of an amorphous gradient high vinyl butadiene-styrene copolymer rubber having an average content of 1,2-bonds in the butadiene units or not less than 60% by weight, in which copolymer the 1,2-bond content uniformly varies along the molecular chain of the copolymer, can improve the running stability and low rolling resistance of a tire while maintaining the breakage strength of the tire.

However, the running stability of a tire on a wet road surface is important in view of safe running, and the development of low fuel consumption tires having high performance has been demanded from the view point of resource saving. Bearing these problems in mind, the inventors have made various investigations with respect to styrene-butadiene copolymer rubber in order to further improve the breakage strength, low rolling resistance and running stability of tires, and ascertained that the above described various properties can be improved by the use of a specifically limited rubber composition consisting mainly of a rubber containing at least 20 parts by weight, based on 100 parts by weight of the rubber, of a specifically limited high vinyl butadiene-styrene copolymer rubber.

The present invention provides a rubber composition for tires, which comprises a rubber component

0 048 619

containing at least 20 parts by weight, based on 100 parts by weight of the rubber component, of a high vinyl butadiene-styrene copolymer rubber obtained by randomly copolymerizing styrene and 1,3-butadiene, and containing 3—30% by weight of bonded styrene and 60—95% by weight of 1,2-bonds in the butadiene units, and further containing in its main chain bonds of at least one metal selected from silicon, germanium, tin and lead with butadienyl groups, in a weight fraction of at least 20% by weight.

The high vinyl butadiene-styrene copolymer rubber to be used in the present invention contains 3—30% by weight of bonded styrene and 60—95% by weight of 1,2-bonds in the butadiene units. When the amount of the bonded styrene is less than 3% by weight, the resulting copolymer rubber is not substantially different from high vinyl BR and the effect for improving the breakage and wear resistances due to introduction of styrene groups cannot be expected, while when the amount of bonded styrene exceeds 30% by weight, the hysteresis loss at about 0°C becomes larger and the running stability is improved but the hysteresis loss at 50—70°C also becomes concurrently larger, so that the rolling resistance is noticeably increased. When the amount of 1,2-bonds is less than 60% by weight, the running stability is not substantially improved, while when the amount of 1,2-bonds is more than 95% by weight, the glass transition temperature becomes high and the low temperature brittleness is noticeably decreased.

When it is intended to improve the wet skid resistance and low rolling resistance while maintaining good breakage resistance and wear resistance, it is preferable to blend the high vinyl butadiene-styrene copolymer rubber with natural rubber or synthetic polyisoprene rubber having a self-reinforcing property due to the crystallinity in the stretched state. On the other hand, when it is intended to improve the low rolling resistance while maintaining good wear resistance and wet skid resistance, it is preferable to blend the high vinyl butadiene-styrene copolymer rubber with ordinary styrene-butadiene copolymer rubber having good wear resistance and wet skid resistance. As described later, the high vinyl butadiene-styrene copolymer rubber is completely compatible with natural rubber, and the resulting rubber blend has a united glass transition temperature Tg. Therefore, in order to obtain a rubber composition having a large tan δ at 0°C as an index of wet skid resistance, the high vinyl butadiene-styrene copolymer rubber preferably has a Tg within the range of from −50°C to 0°C. In high vinyl butadiene-styrene copolymer rubbers having such a Tg range, high vinyl butadiene-styrene copolymer rubbers containing 3—10% by weight of bonded styrene and from more than 80% by weight to 95% by weight of 1,2-bonds in the butadiene units or containing 15—30% by weight of bonded styrene and 60—75% by weight of 1,2-bonds in the butadiene units are preferable.

In the present invention, as rubbers to be blended with the high vinyl butadiene-styrene copolymer rubber, use is preferably made of diene rubber having a glass transition temperature Tg of not higher than −50°C. This is because even though the high vinyl butadiene-styrene copolymer rubber has a higher Tg than other usual rubbers, the Tg is raised owing to the 1,2-bonds, so that such a copolymer rubber has the specific property that the heat generation is low. Therefore, rubbers capable of being blended with the copolymer rubber without adversely affecting this property are ones preferably having a Tg of not higher than −50°C. That is, these rubbers having a Tg of not higher than −50°C show the maximum value of mechanical loss (tan δ) at a temperature range of not higher than −35°C, so that even if these rubbers are blended with the high vinyl butadiene-styrene copolymer rubber, the tan δ values at about 0°C and 50—70°C are not substantially influenced.

When polybutadiene rubber, ordinary styrene-butadiene copolymer rubber or ethylene-propylene-diene ternary copolymer rubber among diene rubbers are blended, these rubbers have no compatibility with the high vinyl butadiene-styrene copolymer rubber, so that the glass transition temperatures of the polymers are not united, and therefore the blended amount can be freely varied depending upon the object and use, and the amount of these rubbers blended is 20—80 parts by weight in 100 parts by weight of the blend rubber. In particular, when a blend rubber is used for a tire tread for running on a poor quality road, the blended amount is 40—80 parts by weight, and in a tire tread and side wall for running on a good road in which the running stability, weather resistance and heat aging resistance are important, the blended amount is preferably about 20—60 parts by weight.

The above described ordinary styrene-butadiene copolymer rubber is commercially available SBR having a Tg of not higher than −50°C, and includes emulsion-polymerized SBRs, such as SBR 1500 and SBR 1712, and solution-polymerized SBRs, such as Solprene 1204 and Solprene 1205. "SOLPRENE" is a Registered Trade Mark.

When natural rubber and/or synthetic polyisoprene rubber among diene rubbers is blended, these rubbers are compatible with the high vinyl butadiene-styrene copolymer rubber in any ratio and the glass transition temperatures are united and a glass transition temperature averaged according to the volume percentages of these polymers is obtained. Therefore, when the amount of natural rubber and/or synthetic polyisoprene rubber blended is 20—80 parts by weight in 100 parts by weight of the blend rubber, it is possible to make tan δ at about 0°C larger and tan δ at 50—60°C smaller. Further, the use of a rubber blend of 40—80 parts by weight of the high vinyl butadiene-styrene copolymer rubber with 20—60 parts by weight of natural rubber and/or synthetic polyisoprene rubber is more advantageous for making tan δ at about 0°C larger and tan δ at 50—60°C smaller.

In particular, when it is intended to improve concurrently the low fuel consumption, wear resistance, wet skid resistance and breakage strength, there is preferably used a rubber blend consisting of 20—70 parts by weight of the high vinyl butadiene-styrene copolymer rubber, 10—30 parts by weight of ordinary

3

styrene-butadiene copolymer rubber and 20—50 parts by weight of natural rubber and/or synthetic polyisoprene rubber. This is because, when the amount of ordinary styrene-butadiene copolymer rubber exceeds 30 parts by weight, the resulting rubber composition does not have a satisfactorily low rolling resistance, while when the amount thereof is less than 10 parts by weight, the resulting rubber composition has poor wet skid resistance and wear resistance. When the amount of natural rubber and/or synthetic polyisoprene rubber exceeds 50 parts by weight, the resulting rubber composition has a satisfactorily low rolling resistance, but has poor wet skid resistance, while the amount thereof is less than 20 parts by weight, the resulting rubber composition has poor breakage strength and high rolling resistance.

Further, the rubber composition according to the present invention must satisfy the following requirement. That is, the high vinyl butadiene-styrene copolymer contains in its main chain bonds of at least one metal selected from silicon, germanium, tin and lead with butadienyl groups in a weight fraction of at least 20%, preferably at least 40% by weight. Among the metals of silicon, germanium, tin and lead, tin is most effective for improving concurrently the wet skid resistance and low rolling resistance.

The bonds of metal with butadienyl groups in the main chain can be obtained by copolymerizing 1,3-butadiene with styrene in the presence of an organolithium compound and carrying out a coupling reaction between the resulting copolymer and a metal halide. It is a surprising phenomenon that a rubber composition containing a copolymer having such bonds has remarkably improved resistance against heat generation, and further remarkably improved breakage strength, particularly breakage strength at high temperature.

When the bonds of metal with butadienyl groups are introduced into copolymers, the molecular chains of the copolymers are mutually bonded to form a so-called star-shaped polymer. The star-shaped polymer is more stable than a sulfur-crosslinked polymer formed by vulcanization commonly carried out in the rubber industry, and is difficult to subject to chemical changes, such as breakage and recombination, even at high temperature. Therefore, the molecular weight of the copolymer between crosslinked points is determined depending only upon the molecular weight distribution just before the coupling reaction, and the crosslink functionality of the copolymer is determined depending upon the functionality of the metal halide, and hence regular crosslinked points can be introduced into the copolymers.

Accordingly, in a rubber composition not containing such star-shaped polymer, all the crosslinked points are irregular ones formed by sulfur, and therefore the molecular weight between crosslinked points is distributed over a wide range. On the other hand, in a rubber composition containing star-shaped polymer, the proportion of molecular weight between the specifically limited crosslinked points is relatively large. This fact is one of the reasons for improving the breakage resistance. That is, when an external force is applied to a rubber composition not containing star-shaped polymer, the molecular chain having a low molecular weight between crosslinked points is strained, and the stress becomes concentrated and the strained molecular chain is selectively broken to lower the breakage strength of the rubber composition. On the contrary, in a rubber composition containing star-shaped polymer, such a phenomenon seldom occurs and the breakage strength can be improved. This is one of the reasons for improving the breakage strength even at high temperature, at which the reinforcing property of carbon black is adversely affected and points crosslinked by sulfur become unstable.

In general, when strain is applied to a rubber composition, both enthalpy-type stress due to the reinforcing property of carbon black and entropy-type stress due to crosslinked points are generated, and the latter is a stress-generating mechanism which is generally referred to as rubber elasticity, and is not essentially accompanied by energy loss.

Accordingly, in order to improve the resistance against heat generation, that is the low rolling resistance of a rubber composition, it is necessary for the elasticity of the rubber to be used in the rubber composition to approach the ideal rubber elasticity as closely as possible. The ideal rubber elasticity can be obtained by making both the molecular weight between crosslinked points and the crosslink functionality uniform, and by decreasing the number of free terminal chains (terminal molecular chain having no crosslinked point). Such a crosslinking structure can be obtained by introducing bonds of metal with butadienyl groups into the main chain of the styrene-butadiene copolymer.

The effect for improving the breakage strength and low rolling resistance varies depending upon the amount of sulfur contained in a rubber composition and the initial molecular weight of copolymer. However, in the high vinyl butadiene-styrene copolymer rubber to be used in the composition according to the present invention, when the copolymer rubber contains in its main chain bonds of metal with butadienyl groups in a weight fraction of at least 20% by weight, preferably at least 40% by weight, a rubber composition having remarkably high breakage strength and remarkably low rolling resistance can be obtained.

Further, the use of a gradient high vinyl butadiene-styrene copolymer rubber, which contains 3—30% by weight of bonded styrene and has an average content of 1,2-bonds in the butadiene units of not less than 60% by weight, in which copolymer the 1,2-bond content uniformly varies along the molecular chain of the copolymer, is further effective for improving the performance of the rubber composition.

The diene rubbers preferably having a Tg not higher than −50°C to be used in the present invention include natural rubber, synthetic polyisoprene rubber, ethylene-propylene-diene ternary copolymer rubber, and polybutadiene rubber and styrene-butadiene copolymer rubber containing not more than 50%

4

by weight of 1,2-bonds in the butadiene units. At least one of these diene rubbers is preferably blended with the high vinyl butadiene-styrene copolymer rubber.

In the present invention, it is preferable to incorporate in the rubber composition 1—40 parts by weight of a softening agent and 5—70 parts by weight of carbon black based on 100 parts by weight of the rubber component. When the amount of the softening agent exceeds 40 parts by weight and the amount of carbon black exceeds 70 parts by weight, the heat generation of the rubber composition becomes higher and the rolling resistance is increased and therefore such amounts are not preferable.

There may be incorporated in the rubber compositions of the present invention conventionally used compounding agents, such as a vulcanizing agent, accelerating agent, promoter assistant, and/or antioxidant.

The rubber compositions of the present invention have excellent wear resistance and breakage resistance and have noticeably improved running stability.

The invention will be further described with reference to the following illustrative Examples.

Example 1

Various butadiene-styrene copolymers shown in the following Table 1 were used in the production of rubber compositions. Copolymers A—N were produced by using n-butyl lithium as a catalyst. Copolymers A and C—M were produced under a temperature-raising adiabatic atmosphere, and copolymers B and B were produced under a constant temperature atmosphere. Butadienyl-tin bonds were introduced into the main chain of copolymers A—L and N by the coupling of $SnCl_4$ with the copolymers. Copolymer P is SBR 1500.

The styrene content in each copolymer measured by gas chromatography, the content of 1,2-bonds in the butadiene units was measured by an infrared spectrometer, and the tan δ value was measured by means of a mechanical spectrometer (amplitude of dynamic shear strain: 0.5%) made by Rheometrics Corp. The weight fraction of molecular chains containing butadienyl-metal bonds was measured by means of gel-permeation chromatography.

Various rubber compositions were produced by using copolymers A—N according to the compounding recipes shown in the following Table 2. The tan δ and breakage strength of the resulting rubber compositions were measured. Further, tires having a size of 165 SR 13 were produced by using the rubber composition in their treads, and the tires were evaluated with respect to their wear resistance, rolling resistance, braking performance on a wet road and resistance to formation of cracks and cuts during running on a nonpaved road.

The obtained results are shown in the following Table 3. The evaluation methods were as follows.

BREAKAGE STRENGTH

The breakage strength was measured according to JIS K6301.

WEAR RESISTANCE

After a test tire was run on a road a distance of 10,000 km, the depth of the remaining tread was measured, and the running distance of the tire required for wearing 1 mm of its tread was calculated and compared with a standard running distance. Index 100 corresponds to the standard running distance. The larger the index of the rubber composition, the higher is its wear resistance.

ROLLING RESISTANCE

A test tire subjected to an internal pressure of 1.7 kg/cm² was trained on a steel drum having a diameter of 1,707.6 mm and a width of 350 mm, which was rotated by the driving of a motor at a speed of 80 km/hr under a JIS 100% load (385 kg) for 30 minutes and thereafter the rotating speed of the drum was raised to 100 km/hr. Then, the driving of the motor was stopped to run the drum by inertia, during which the rolling resistance of the tire to the drum at a speed of 50 km/hr was measured on a basis of deceleration speed of drum and time change. Next, a net rolling resistance of the tire was determined by subtracting a previously calculated drum resistance from the measured value. The rolling resistance of the test tire was evaluated by the following formula:

$$\frac{(\text{Rolling resistance value of test tire})}{5.2 \text{ kg}} \times 100$$

Index 100 corresponds to a rolling resistance of 5.2 kg. The smaller the index, the better is the rolling resistance of the tire.

Braking performance on a wet road

A test tire was suddenly braked during running at a speed of 80 km/hr on a wet concrete road covered with water to a depth of 3 mm, and the running distance of the tire after the tire was locked was measured.

**0 048 619**

The braking performance on the wet road of the test tire was evaluated by the following formula:

$$\frac{\text{(Running distance of test tire)}}{40 \text{ m}} \times 100$$

Index 100 corresponds to a running distance of 40 m. The smaller the index, the better is the braking performance of the tire on a wet road.

Resistance on nonpaved road (against formation of cracks and cuts)
    After a test tire was run on a nonpaved road a distance of 5,000 km, 70% of which was occupied by a surface consisting mainly of gravel, the tire was taken off from the car, and formation of cracks and cuts on the tread surface was observed.

TABLE 1

| Copolymer | A | B | C | D | E | F | G | H- | I | J | K | L | M | N | P |
|---|---|---|---|---|---|---|---|---|---|---|---|---|---|---|---|
| Styrene content (wt. %) | 30 | 30 | 30 | 20 | 20 | 5 | 5 | 3 | 10 | 15 | 40 | 30 | 30 | 0 | 23.5 |
| Content of 1,2-bonds in butadiene units (wt. %) | 65 | 65 | 65 | 65 | 80. | 90 | 90 | 95 | 82 | 30 | 65 | 65 | 65 | 65 | 18 |
| Weight fraction of molecular chain containing butadienyl-metal bonds (wt. %) | 30 | 30 | 70 | 20 | 30 | 30 | 70 | 30 | 30 | 30 | 30 | 15 | 0 | 30 | 0 |
| Gradient distribution of 1,2-bond content | yes | no | yes | yes | yes | yes | yes | yes | yes | yes | yes | yes | yes | no | no |

TABLE 2

(Parts by weight)

| Rubber Composition No. | 1 — 14 and 30 — 35 | 15 and 16 |
|---|---|---|
| Copolymer listed in Table 1 or Table 5 | 50 | 100 |
| Natural rubber | 50 | |
| ISAF carbon black | 50 | 50 |
| Aromatic oil | 10 | 10 |
| Zinc oxide | 4 | 4 |
| Stearic acid | 2 | 2 |
| N-Oxydiethylene-2-benzothiazylsulfenamide | 0.55 | 0.55 |
| Dibenzothiazyl disulfide | 0.3 | 0.3 |
| Sulfur | 2.0 | 2.0 |
| N-Phenyl-N'-isopropyl-p-phenylenediamine | 1.0 | 1.0 |

TABLE 3

| Rubber composition No. | Present invention | | | | | | | | | Comparative rubber composition | | | | | | Present invention |
|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 |
| Copolymer | A | B | C | D | E | F | G | H | I | J | K | L | M | N | P | A |
| Tan $\delta$ (0°C) | 0.597 | 0.600 | 0.582 | 0.50 | 0.580 | 0.43 | 0.42 | 0.45 | 0.51 | 0.22 | 0.650 | 0.585 | 0.610 | 0.230 | 0.3 | 0.740 |
| Tan $\delta$ (60°C) | 0.082 | 0.090 | 0.076 | 0.087 | 0.091 | 0.075 | 0.069 | 0.076 | 0.080 | 0.181 | 0.232 | 0.155 | 0.240 | 0.110 | 0.211 | 0.120 |
| Breakage strength (kg/cm$^2$) | 249 | 242 | 252 | 240 | 240 | 238 | 241 | 237 | 240 | 220 | 250 | 239 | 238 | 160 | 252 | 200 |
| Wear resistance | 109 | 104 | 110 | 106 | 103 | 107 | 109 | 103 | 107 | 85 | 99 | 98 | 96 | 72 | 100 | 96 |
| Rolling resistance | 69 | 71 | 63 | 70 | 70 | 64 | 59 | 64 | 66 | 100 | 110 | 193 | 112 | 75 | 100 | 80 |
| Braking performance on wet road | 75 | 76 | 76 | 90 | 79 | 89 | 90 | 87 | 77 | 98 | 102 | 77 | 82 | 97 | 100 | 70 |
| Resistance against non paved road (formation of cracks and cuts) | none | none | none | none | none | none | none | none | none | none | none | none | none | do | none | do |

0 048 619

It can be seen from Table 3 that the rubber compositions of the present invention have, overall, considerably better breakage strength, wear resistance, running stability and rolling resistance, as compared with the comparative rubber compositions.

Example 2

Various rubber compositions were produced according to the compounding receipes shown in the following Table 4, and evaluated in the same manner as described in Example 1. The obtained results are shown in Table 4.

It can be seen from Table 4 that the rubber compositions of the present invention have, overall, considerably better breakage strength, wear resistance, running stability and rolling resistance, as compared with the comparative rubber compositions.

TABLE 4(a)

| Rubber composition | | Present invention | | | | | | | | | | Comparative rubber composition | | |
|---|---|---|---|---|---|---|---|---|---|---|---|---|---|---|
| | | 17 | 18 | 19 | 20 | 21 | 22 | 23 | 24 | 25 | 26 | 27 | 28 | 29 |
| Compounding recipe (parts by weight) | Copolymer A | 50 | 50 | 50 | | | | | | | | | | |
| | Copolymer D | | | | 40 | 80 | | | | | | | | |
| | Copolymer F | | | | | | 50 | 50 | 50 | 40 | 70 | | | |
| | Copolymer J | | | | | | | | | | | 50 | 50 | 50 |
| | BR01 | 20 | | | | | 20 | | | | | 20 | | |
| | IR 2200 | | 50 | | 40 | 20 | | 50 | | 35 | 30 | | 50 | |
| | SBR 1500 | 30 | | 50 | 20 | | 30 | | 50 | 25 | | 30 | | 50 |
| | ISAF carbon black | 50 | 50 | 50 | 50 | 50 | 50 | 50 | 50 | 50 | 50 | 50 | 50 | 50 |
| | Aromatic oil | 10 | 10 | 10 | 10 | 10 | 10 | 10 | 10 | 10 | 10 | 10 | 10 | 10 |
| | Zinc oxide | 4 | 4 | 4 | 4 | 4 | 4 | 4 | 4 | 4 | 4 | 4 | 4 | 4 |
| | Stearic acid | 2 | 2 | 2 | 2 | 2 | 2 | 2 | 2 | 2 | 2 | 2 | 2 | 2 |
| | N-Oxydiethylene-2-benzothiazylsulfenamide | 0.55 | 0.55 | 0.55 | 0.55 | 0.55 | 0.55 | 0.55 | 0.55 | 0.55 | 0.55 | 0.55 | 0.55 | 0.55 |
| | Dibenzothiazyl disulfide | 0.3 | 0.3 | 0.3 | 0.3 | 0.3 | 0.3 | 0.3 | 0.3 | 0.3 | 0.3 | 0.3 | 0.3 | 0.3 |
| | Sulfur | 2.0 | 2.0 | 2.0 | 2.0 | 2.0 | 2.0 | 2.0 | 2.0 | 2.0 | 2.0 | 2.0 | 2.0 | 2.0 |
| | N-Phenyl-N'-isopropyl-p-phenylenediamine | 1.0 | 1.0 | 1.0 | 1.0 | 1.0 | 1.0 | 1.0 | 1.0 | 1.0 | 1.0 | 1.0 | 1.0 | 1.0 |

0 048 619

TABLE 4(b)

| | | Present invention | | | | | | | | | | Comparative rubber composition | | |
|---|---|---|---|---|---|---|---|---|---|---|---|---|---|---|
| Rubber composition No. | | 17 | 18 | 19 | 20 | 21 | 22 | 23 | 24 | 25 | 26 | 27 | 28 | 29 |
| property | $\tan \delta$ (0°C) | 0.572 | 0.575 | 0.685 | 0.53 | 0.67 | 0.51 | 0.42 | 0.55 | 0.65 | 0.68 | 0.19 | 0.20 | 0.27 |
| | $\tan \delta$ (60°C) | 0.080 | 0.081 | 0.092 | 0.091 | 0.095 | 0.080 | 0.077 | 0.083 | 0.070 | 0.091 | 0.155 | 0.179 | 0.200 |
| | Breakage strength ($kg/cm^2$) | 241 | 245 | 248 | 245 | 243 | 243 | 237 | 245 | 260 | 235 | 203 | 210 | 215 |
| | Wear resistance | 105 | 103 | 105 | 105 | 103 | 105 | 105 | 106 | 108 | 101 | 92 | 89 | 91 |
| | Rolling resistance | 69 | 67 | 72 | 70 | 72 | 68 | 66 | 69 | 61 | 70 | 95 | 100 | 100 |
| | Braking performance on wet road | 79 | 77 | 74 | 79 | 66 | 83 | 90 | 79 | 68 | 65 | 93 | 96 | 100 |
| | Resistance against non paved road (formation of cracks and cuts) | none | none | none | none | none | none | none | none | none | none | do | none | none |

### Example 3

Rubber compositions were produced by using copolymers shown in the following Table 5 according to the compounding recipe shown in Table 2, and the resulting rubber compositions were evaluated in the same manner as described in Example 1. The obtained results are shown in Table 5.

It can be seen from Table 5 that the rubber compositions of the present invention have overall good breakage strength, wear resistance, running stability and rolling resistance.

TABLE 5

| | Present invention | | | | | |
|---|---|---|---|---|---|---|
| Rubber composition No. | 30 | 31 | 32 | 33 | 34 | 35 |
| Styrene content (wt. %) | 30 | 30 | 30 | 5 | 5 | 5 |
| Content of 1,2-bond in butadiene unit (wt. %) | 65 | 65 | 66 | 90 | 90 | 90 |
| Weight fraction of molecular chain containing butadienyl-metal bond (wt. %) | 30 | 28 | 30 | 25 | 20 | 25 |
| Metal | silicon | germanium | lead | silicon | germanium | lead |
| $\tan \delta$ (°C) | 0.572 | 0.569 | 0.575 | 0.46 | 0.47 | 0.48 |
| $\tan \delta$ (60°C) | 0.087 | 0.080 | 0.102 | 0.083 | 0.086 | 0.091 |
| Breakage strength ($kg/cm^2$) | 247 | 245 | 240 | 237 | 235 | 236 |
| Wear resistance | 107 | 109 | 104 | 103 | 105 | 101 |
| Rolling resistance | 69 | 70 | 73 | 69 | 70 | 70 |
| Braking preformance on wet road | 78 | 76 | 80 | 90 | 89 | 89 |
| Resistance against nonpaved road (formation of cracks and cuts) | none | none | none | none | none | none |

**0 048 619**

**Claims**

1. A rubber composition for tires, characterized by comprising a rubber component containing at least 20 parts by weight, based on 100 parts by weight of the rubber component, of a high vinyl butadiene-styrene copolymer rubber obtained by randomly copolymerizing styrene and 1,3-butadiene, and containing 3—30% by weight of bonded styrene and 60—95% by weight of 1,2-bonds in the butadiene units, and further containing in its main chain bonds of at least one metal selected from silicon, germanium, tin and lead with butadienyl groups, in a weight fraction of at least 20% by weight.

2. A rubber composition as claimed in claim 1, characterized in that the rubber component is a rubber blend consisting of 20—80 parts by weight of the said high vinyl butadiene-styrene copolymer and 80—20 parts by weight of a diene rubber having a glass transition temperature of not higher than −50°C.

3. A rubber composition as claimed in claim 1 or 2, characterized by containing said metal-butadienyl bonds in a weight fraction of at least 40% by weight.

4. A rubber composition as claimed in any of claims 1 to 3, characterized by incorporating 1 to 40 parts by weight of a softening agent and 5 to 70 parts by weight of carbon black, based on 100 parts by weight of the rubber component.

**Patentansprüche**

1. Kautschukmasse für Reifen, dadurch gekennzeichnet, daß sie eine Kautschukkomponente umfaßt, enthaltend zumindest 20 Gew.-Teile, bezogen auf 100 Gew.-Teile der Kautschukkomponente eines Butadien/Styrol-Copolymer-Kautschuks mit hohem Vinylgehalt erhalten durch (statistisches) Compolymerisieren von Styrol und 1,3-Butadien und enthaltend 3 bis 30 Gew.-% gebundenes Styrol und 60 bis 95 Gew.-% 1,2-Bindungen in den Butadieneinheiten und ferner enthaltend in der Hauptkette Bindungen von zumindest einem Metall, ausgewählt aus Silicium, Germanium, Zinn und Blei an Butadienylgruppen in einem Gew.-Anteil von zumindest 20 Gew.-%.

2. Kautschukmasse nach Anspruch 1, dadurch gekennzeichnet, daß die Kautschukkomponente ein Kautschukgemisch ist, bestehend aus 20 bis 80 Gew.-Teilen der erwähnten Butadien/Styrol-Copolymers mit hohem Vinylanteil und 80 bis 20 Gew.-Teilen eines Dienkautschuks mit einer Glasübergangstemperatur von nicht mehr als −50°C.

3. Kautschukmasse nach Anspruch 1 oder 2, dadurch gekennzeichnet, daß sie die erwähnten Metall-Butadienyl-Bindungen in einem Gew.-Anteil von zumindest 40 Gew.-% enthält.

4. Kautschukmasse nach einem der Ansprüche 1 bis 3, dadurch gekennzeichnet, daß 1 bis 40 Gew.-Teile eines Weichmachers und 5 bis 70 Gew.-Teile Ruß, bezogen auf 100 Gew.-Teile der Kautschukkomponente, eingebaut sind.

**Revendications**

1. Une composition de caoutchouc pour pneumatiques, caractérisée en ce qu'elle renferme un caoutchouc contenant au moins 20 parties en poids, pour 100 parties en poids de caoutchouc, d'un caoutchouc constitué de copolymère butadiène-styrène à teneur élevée en groupes vinyles obtenu par copolymérisation statistique de styrène et de butadiène-1,3 et contenant 3 à 30% en poids de styrène lié et 60 à 95% en poids de liaisons en 1,2 sur les motifs butadiène et contenant en outre dans sa chaîne principale des liaisons d'au moins un métal choisi parmi le silicium, le germanium, l'étain et le plomb, avec les groupes butadiényles, en une proportion d'au moins 20% en poids.

2. Composition de caoutchouc selon la revendication 1, caractérisée en ce que le caoutchouc qu'elle contient est un mélange de caoutchouc composé de 20 à 80 parties en poids dudit copolymère butadiène-styrène à teneur élevée en groupes vinyles et de 80 à 20 parties en poids d'un caoutchouc diénique possédant une température de transition vitreuse non supérieure à −50°C.

3. Composition de caoutchouc selon la revendication 1 ou 2, caractérisée en ce qu'elle contient lesdites liaisons métal-butadiényle en une proportion d'au moins 40% en poids.

4. Composition de caoutchouc selon l'une quelconque des revendications 1 à 3, caractérisée par l'incorporation de 1 à 40 parties en poids d'un plastifiant et de 5 à 70 parties en poids de noir de carbone par rapport à 100 parties en poids du caoutchouc qu'elle contient.